# EUROPEAN PATENT APPLICATION

(11) **EP 4 712 072 A2**
(43) Date of publication of application: **18.03.2026**
(21) Application number: 26156014.8
(22) Date of filing: 08.06.2022
(51) Int. Cl.: G10L 19/00

(54) **METHOD AND SYSTEM FOR GENERATING COMPOSITE SPEECH BY USING STYLE TAG EXPRESSED IN NATURAL LANGUAGE**

(30) Priority: 08.06.2021 KR 20210074436
(62) Divisional of application: 22820559.7
(71) Applicant: Neosapience, Inc., Seoul 06134 (KR)
(72) Inventor: KIM, Taesu, 16222 Suwon-si, Gyeonggi-do (KR); LEE, Younggun, 03335 Seoul (KR); SHIN, Yookyung, 03116 Seoul (KR); KIM, Hyeongju, 08806 Seoul (KR)
(74) Representative: Wittmer, Maximilian

(57) **Abstract**

A method for generating a synthesis voice is provided, which is performed by one or more processors, and includes acquiring a text-to-speech synthesis model trained to generate a synthesis voice for a training text, based on reference voice data and a training style tag represented by natural language, receiving a target text, acquiring a style tag represented by natural language, and inputting the style tag and the target text into the text-to-speech synthesis model and acquiring a synthesis voice for the target text reflecting voice style features related to the style tag.

## Description

### TECHNICAL FIELD

The present disclosure relates to a method and system for generating a synthesis voice using a style tag represented by natural language, and specifically, to a method and system for generating a synthesis voice reflecting a style tag represented by natural language as a voice style feature.

### BACKGROUND

In addition to the broadcast programs including audio contents for the conventional broadcasting channels such as TVs and radios, numerous programs have been produced and released for web-based video services such as YouTube and podcasts provided online. In order to generate such a program including audio content, applications for generating or editing audio content including audio are widely used. However, generating the audio content for use in such video programs involves hiring actors such as voice actors, announcers, etc., recording their voices, and editing the recorded voices using a voice editing application, which is inconvenient. To solve this inconvenience, research is being conducted to produce unrecorded voices and/or contents using speech synthesis technology rather than producing audio content by recording human voices.

Speech synthesis technology, also commonly called Text-To-Speech (TTS), is a technology that converts text into speech using a virtual voice, and is used in announcements, navigation, artificial intelligence assistants, etc. Typical speech synthesis method includes concatenative TTS which divides and stores a speech in very short units such as phonemes, and combines phonemes in a sentence to be synthesized to synthesize a speech, and parametric TTS which represents speech features by parameters and synthesizes parameters representing speech features of a sentence to be synthesized into a voice corresponding to the sentence with a vocoder.

The related speech synthesis technologies can be used for the production of the broadcast programs, but the audio contents generated through the speech synthesis technologies described above do not reflect the speaker's personality and emotions, which may degrade its effectiveness as the audio contents for the production of the broadcast programs. Moreover, in order to ensure that the broadcast programs produced with the speech synthesis technologies have a similar quality to the broadcast programs produced through human recording, a technique is required, which reflects the emotions and talking style, etc. of a speaker in each of the lines in the audio contents that are generated using the speech synthesis technologies. Furthermore, a user interface technology is also required, which enables a user to intuitively and easily generate and edit audio content by reflecting styles based on text in the production and editing of the broadcast program.

### SUMMARY

In order to address one or more problems (e.g., the problems described above and/or other problems not explicitly described herein), the present disclosure provides a method for, a non-transitory computer-readable recording medium storing instructions for, and an apparatus (system) for generating a synthesis voice and generating a synthesis image.

The present disclosure may be implemented in a variety of ways, including methods, apparatus (systems) and/or non-transitory computer readable storage media storing instructions.

A method for generating a synthesis voice may be executed by one or more processors and may include acquiring a text-to-speech synthesis model trained to generate a synthesis voice for a training text, based on reference voice data and a training style tag represented by natural language, receiving a target text, acquiring a style tag represented by natural language, and inputting the style tag and the target text into the text-to-speech synthesis model and acquiring a synthesis voice for the target text reflecting voice style features related to the style tag.

In addition, the acquiring the style tag may include providing a user interface to input the style tag, and acquiring at least one style tag represented in the natural language through the user interface.

In addition, the acquiring the style tag may include outputting a style tag recommendation list including a plurality of candidate style tags represented by natural language to the user interface, and acquiring at least one candidate style tag selected from the style tag recommendation list as the style tag for the target text.

In addition, the outputting the style tag recommendation list to the user interface may include identifying at least one of emotion or mood represented in the target text, determining the plurality of candidate style tags related to at least one of the identified emotion or mood, and outputting the style tag recommendation list including the determined plurality of candidate style tags to the user interface.

In addition, the outputting the style tag recommendation list to the user interface may include determining the plurality of candidate style tags based on a style tag usage pattern of the user, and outputting the style tag recommendation list including the determined plurality of candidate style tags to the user interface.

In addition, the providing the user interface may include detecting a partial input of natural language related to the style tag, automatically completing at least one candidate style tag including the partial input, and outputting the automatically completed at least one candidate style tag through the user interface.

In addition, the acquiring the style tag may include receiving a selection for a preset, and acquiring a style tag included in the preset as a style tag for the target text.

In addition, the text-to-speech synthesis model may generate a synthesis voice for the target text reflecting the voice style features based on features of reference voice data related to the style tag.

In addition, the text-to-speech synthesis model may acquire embedding features for the style tag and generate a synthesis voice for the target text reflecting the voice style features based on the acquired embedding features.

In addition, the text-to-speech synthesis model may be trained to minimize a loss between a first style feature extracted from the reference voice data and a second style feature extracted from the training style tag.

In addition, the text-to-speech synthesis model may extract sequential prosodic features from the style tags and generate a synthesis voice for the target text reflecting the sequential prosodic features as the voice style features.

In addition, the method for generating a synthesis voice may further include inputting the acquired synthesis voice into a voice-to-video synthesis model and acquiring a video content for a virtual character talking in the synthesis voice with a facial expression related to the style tag, and the voice-to-video synthesis model may be trained to determine a facial expression of the virtual character based on style features related to the style tag.

In addition, the style tags may be input through an API call.

A method for generating a synthesis voice may be executed by one or more processors and may include inputting a target text into a text-to-speech synthesis model and acquiring a synthesis voice for the target text reflecting voice style features, outputting a user interface in which the voice style features are visualized, receiving a change input for the visualized voice style features through a user interface, and modifying the synthesis voice based on the change input.

In addition, the outputting the user interface may include outputting the user interface in which the voice style features are visualized as a shape, and the receiving the change input may include receiving the change input including at least one of a change in a size of the shape or a change in a position of the shape, and identifying a change value for the voice style feature based on the changed shape.

In addition, the modifying the synthesis voice may include receiving a selection input for a word to be emphasized through the user interface, and modifying the synthesis voice so that selected word is talked with emphasis.

In addition, the outputting the user interface may include determining a plurality of candidate words from the target text, and outputting the determined plurality of candidate words to the user interface, and the receiving the selection input for the word to be emphasized may include receiving a selection input for at least one of the output plurality of candidate words.

In addition, the user interface may include an adjustment menu to adjust a talking rate of the synthesis voice, and the modifying the synthesis voice may include modifying the talking rate of the synthesis voice based on a rate change input received from the adjustment menu.

In addition, the user interface may include an adjustment menu to adjust the prosody of the synthesis voice, and the modifying the synthesis voice may include modifying the prosody of the synthesis voice based on a prosody change input received from the adjustment menu.

A method for generating a synthesis image may be performed by one or more processors, and may include acquiring a voice-to-video synthesis model trained to generate an image content based on reference video data and a training style tag represented by natural language, receiving a voice, acquiring a style tag represented by natural language, and inputting the style tag and the voice into the voice-to-video synthesis model and acquiring a synthesis image talking in the voice while making at least one of a facial expression or a gesture related to the style tag.

In addition, there is provided a non-transitory computer-readable recording medium storing instructions for executing, on a computer, at least one of the methods described above.

An information processing system is provided, which may include a memory, and one or more processors connected to the memory and configured to execute one or more computer-readable programs included in the memory, in which the one or more programs may include instructions for acquiring a text-to-speech synthesis model trained to generate a synthesis voice for a training text, based on reference voice data and a training style tag represented by natural language, receiving a target text, acquiring a style tag represented by natural language, and inputting the style tag and the target text into the text-to-speech synthesis model and acquiring a synthesis voice for the target text reflecting voice style features related to the style tag.

According to some examples of the present disclosure, a synthesis voice and/or a video content reflecting the voice style features may be generated based on the style tags represented by natural language. The user may input the style tags in natural language format and can cognitively generate the synthesis voice and/or the video content in accordance with their desired feeling.

According to some examples of the present disclosure, the text-to-speech synthesis model may be trained to minimize the loss between the text domain-based style features extracted from the training style tag and the voice domain-based style features extracted from the reference voice data. Accordingly, the synthesis voice and/or the video content that more accurately reflects the emotions and atmosphere inherent in the style tag can be generated.

According to some examples of the present disclosure, the style tag recommendation list determined based on the style tag usage pattern of the user and/or the target text can be provided to the user. The user is able to conveniently input the style tag by selecting at least one style tag included in the style tag recommendation list.

According to some examples of the present disclosure, the style tag input by the user can stored as a preset, after which the style tag included in the preset can be reused as a style tag for the other text sentences. Accordingly, the inconvenience of having to input the style tags every time can be minimized.

According to some examples of the present disclosure, the user interface for controlling the synthesis voice can be provided, and the user is able to conveniently adjust the features inherent in the synthesis voice by changing the graph elements included in the user interface.

According to some examples of the present disclosure, high-quality audio content reflecting the target voice style features can be produced through the style tags without the help of professional actors such as voice actors.

The effects of the present disclosure are not limited to the effects described above, and other effects not described herein can be clearly understood by those of ordinary skill in the art (referred to as "ordinary technician") from the description of the claims.

### BRIEF DESCRIPTION OF THE DRAWINGS

The above and other objects, features and advantages of the present disclosure will be described with reference to the accompanying drawings described below, where similar reference numerals indicate similar elements, but not limited thereto, in which:
FIG. 1 is a diagram illustrating an example of generating a synthesis voice;
FIG. 2 schematically illustrates a configuration in which an information processing system is communicatively connected to a plurality of user terminals;
FIG. 3 is a block diagram illustrating internal configurations of a user terminal and a system for generating a synthesis voice;
FIG. 4 is a block diagram illustrating an internal configuration of a processor included in the system for generating a synthesis voice;
FIG. 5 is a diagram illustrating an example of outputting a synthesis voice from a text-to-speech synthesis model;
FIG. 6 is a diagram illustrating an example of training a second encoder;
FIG. 7 is a diagram illustrating a process of generating a synthesis voice based on a style tag and a target text, in a system for generating a synthesis voice;
FIG. 8 is a diagram illustrating an example in which a text-to-speech synthesis model is trained;
FIG. 9 is a diagram illustrating an example in which a sequential prosodic feature extraction part is trained;
FIG. 10 is a diagram illustrating a process of generating a synthesis voice based on a style tag and a target text, in a system for generating a synthesis voice;
FIG. 11 is a diagram illustrating an example of a text-to-speech synthesis model configured to output a synthesis voice reflecting voice style features;
FIG. 12 is a diagram illustrating a target text input with a style tag;
FIG. 13 is a diagram illustrating a style tag recommendation list output based on a target text;
FIG. 14 is a diagram illustrating a style tag recommendation list output based on user-input information;
FIG. 15 is a diagram illustrating a style tag recommendation list output on a software keyboard;
FIG. 16 is a diagram illustrating an example of reusing a style tag;
FIG. 17 is a diagram illustrating a user interface visually representing embedding vectors;
FIG. 18 is a flowchart provided to explain a method for generating a synthesis voice;
FIG. 19 is a flowchart provided to explain a method for modifying a synthesis voice based on information input through a user interface;
FIG. 20 is a diagram illustrating a process of generating a video content talking in a voice with a facial expression matching a voice style feature;
FIG. 21 is a diagram illustrating an example of generating a video content talking in a voice with a facial expression/gesture related to a style tag; and
FIG. 22 is a flowchart provided to explain a method for generating a synthesis image.

### BRIEF DESCRIPTION OF THE DRAWINGS

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Therefore, the terms used in the present disclosure should be defined based on the meaning of the terms and the overall content of the present disclosure rather than a simple name of each of the terms.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it is intended as meaning that the portion may additionally comprise (or include or have) another component, rather than excluding the same, unless specified to the contrary.

Further, the term "module" or "part" used herein refers to a software or hardware component, and "module" or "part" performs certain roles. However, the meaning of the "module" or "part" is not limited to software or hardware. The "module" or "part" may be configured to be in an addressable storage medium or configured to play one or more processors. Accordingly, as an example, the "module" or "part" may include components such as software components, object-oriented software components, class components, and task components, and at least one of processes, functions, attributes, procedures, subroutines, program code segments, drivers, firmware, micro-codes, circuits, data, database, data structures, tables, arrays, and variables. Furthermore, functions provided in the components and the "modules" or "parts" may be combined into a smaller number of components and "modules" or "parts", or further divided into additional components and "modules" or "parts."

The "module" or "part" may be implemented as a processor and a memory. The "processor" should be interpreted broadly to encompass a general-purpose processor, a Central Processing Unit (CPU), a microprocessor, a Digital Signal Processor (DSP), a controller, a microcontroller, a state machine, and so forth. Under some circumstances, the "processor" may refer to an application-specific integrated circuit (ASIC), a programmable logic device (PLD), a field-programmable gate array (FPGA), and so on. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, and so on. The memory is said to be in electronic communication with a processor if the processor can read information from and/or write information to the memory. The memory integrated with the processor is in electronic communication with the processor.

In the present disclosure, a "system" may refer to at least one of a server apparatus and a cloud apparatus, but is not limited thereto. For example, the system may include one or more server apparatus. In another example, the system may include one or more cloud apparatus. In still another example, the system may include both the server apparatus and the cloud apparatus operated in conjunction with each other.

In addition, terms such as first, second, A, B, (a), (b), etc. used in the following examples are only used to distinguish certain components from other components, and the nature, sequence, order, etc. of the components are not limited by the terms.

In addition, in the following examples, if a certain component is stated as being "connected," "combined" or "coupled" to another component, it is to be understood that there may be yet another intervening component "connected," "combined" or "coupled" between the two components, although the two components may also be directly connected or coupled to each other.

In addition, as used in the following examples, "comprise" and/or "comprising" does not foreclose the presence or addition of one or more other elements, steps, operations, and/or devices in addition to the recited elements, steps, operations, or devices.

Before describing various examples of the present disclosure, terms used herein will be explained.

In the examples of the present disclosure, a "target text" may be a text used as a target to be converted. For example, the target text may be input text that is the basis for generating a synthesis voice.

In the examples of the present disclosure, a "synthesis voice" may be voice data converted based on the target text. For example, the synthesis voice may be the target text recorded using an artificial intelligence voice. In this disclosure, the "synthesis voice" may refer to "synthesis voice data".

In the examples of the present disclosure, a "style tag" may be input data related to the voice style feature. That is, the style tag may be input data related to the voice style features including emotion, tone, intonation, tone of voice, talking rate, accent, etc., and may be represented by natural language. For example, for the style tags, style tags such as "gently", "angry but in a calm tone", "very hastily", "in a quick and passionate tone", "in a somber mood", "one word at a time", and "sternly", etc. may be input. As another example, the style tag may be a sentence including several phrases or complex representations, such as "speaks while feeling extremely sad", "speaks in an angry but calm tone", etc.

In the examples of the present disclosure, a "voice style feature" may include emotions, intonation, tone, talking rate, accent, pitch, sound volume, frequency, etc. inherent in the synthesis voice when the synthesis voice is generated. For example, when a synthesis voice is generated or modified based on the target text, at least one of the emotions, intonation, tone, talking rate, accent, pitch, loudness, etc. represented in the synthesis voice may be determined based on the voice style features. The voice style feature may be an embedding vector. In addition, the voice style feature may be associated with the style tag. For example, if the style tag is "as if angry", the voice style feature reflected in the synthesis voice may be a feature related to "as if angry.' The voice style feature may be referred to as the "style feature".

In the examples of the present disclosure, a "sequential prosodic feature" may include prosodic information corresponding to at least one unit among frame, phoneme, letter, syllable, or word in chronological order. In an example, the prosodic information may include at least one of information on volume of the voice, information on pitch of the voice, information on length of the voice, information on pause duration of the voice, or information on style of the voice. Further, the sequential prosodic feature may be represented by a plurality of embedding vectors, and each of the plurality of embedding vectors may correspond to the prosodic information included in chronological order.

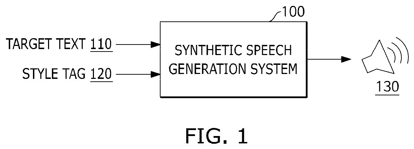

FIG. 1 is a diagram illustrating an example of generating a synthesis voice. As illustrated in FIG. 1, a system 100 for generating a synthesis voice may receive a target text 110 and a style tag 120 and generate a synthesis voice 130. The target text 110 may include one or more paragraphs, sentences, clauses, phrases, words, phrases, phonemes, etc., and may be input by the user.

The style tag 120 for the target text 110 may be determined based on user input. At this time, the style tag 120 may be input in natural language. That is, the user may input the style tag 120 represented by natural language, and accordingly, the system 100 for generating a synthesis voice may receive the style tag 120 represented by natural language. When generating the synthesis voice 130, a user interface or application programming interface (API) for the user to input the style tag 120 represented by natural language may be provided to the user. For example, an API to input the style tag 120 represented by natural language may be called from the user terminal, and the style tag 120 input through the called API may be transmitted to the system 100 for generating a synthesis voice. Additionally or alternatively, the style tag 120 may be generated based on the content of the target text 110.

The system 100 for generating a synthesis voice may input the target text 110 and the style tag 120 into a pre-trained text-to-speech synthesis model, and acquire the synthesis voice 130 output from the text-to-speech synthesis model in response. The synthesis voice 130 acquired as described above may reflect emotions, talking rate, accent, intonation, pitch, sound volume, voice tone, tone, etc. related to the style tag 120. The system 100 for generating a synthesis voice may include a text-to-speech synthesis model trained to generate the synthesis voice 130 related to the style tag 120.

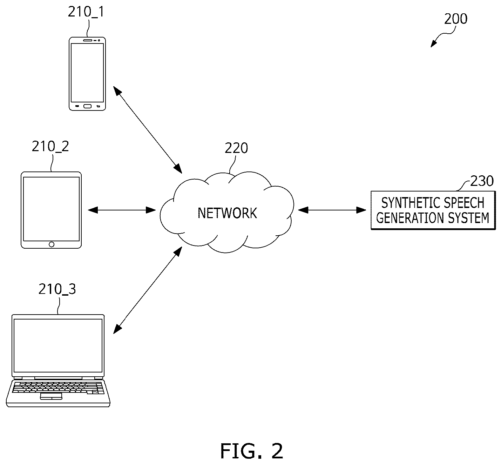

FIG. 2 is a schematic diagram illustrating a configuration 200 in which an information processing system 230 is communicatively connected to a plurality of user terminals 210_1, 210_2, and 210_3. FIG. 2 illustrates the information processing system 230 as a system 230 for generating a synthesis voice. The plurality of user terminals 210_1, 210_2, and 210_3 may communicate with the system 230 for generating a synthesis voice through a network 220. The network 220 may be configured to enable communication between the plurality of user terminals 210_1, 210_2, and 210_3 and the system 230 for generating a synthesis voice. The network 220 may be configured as a wired network 220 such as Ethernet, a wired home network (Power Line Communication), a telephone line communication device and RS-serial communication, a wireless network 220 such as a mobile communication network, a wireless LAN (WLAN), Wi-Fi, Bluetooth, and ZigBee, or a combination thereof, depending on the installation environment. The method of communication is not limited, and may include a communication method using a communication network (e.g., mobile communication network, wired Internet, wireless Internet, broadcasting network, satellite network, etc.) that may be included in the network 220 as well as short-range wireless communication between the user terminals 210_1, 210_2, and 210_3. For example, the network 220 may include any one or more of networks including a personal area network (PAN), a local area network (LAN), a campus area network (CAN), a metropolitan area network (MAN), a wide area network (WAN), a broadband network (BBN), the Internet, etc. In addition, the network 220 may include any one or more of network topologies including a bus network, a star network, a ring network, a mesh network, a star-bus network, a tree or hierarchical network, etc., but not limited thereto.

In FIG. 2, a mobile phone or smart phone 210_1, a tablet computer 210_2, and a laptop or desktop computer 210_3 are illustrated as the examples of the user terminals that execute or operate a user interface providing a service for generating a synthesis voice, but aspects are not limited thereto, and the user terminals 210_1, 210_2, and 210_3 may be any computing device that is capable of wired and/or wireless communication and is installed with a web browser, a mobile browser application, or a synthesis voice generation application to execute the user interface providing the service for generating a synthesis voice. For example, a user terminal 210 may include a smart phone, a mobile phone, a navigation terminal, a desktop computer, a laptop computer, a digital broadcasting terminal, a personal digital assistant (PDA), a portable multimedia player (PMP), a tablet computer, a game console, a wearable device, an internet of things (IoT) device, a virtual reality (VR) device, an augmented reality (AR) device, etc. In addition, FIG. 2 illustrates three user terminals 210_1, 210_2, 210_3 in communication with the system 230 for generating a synthesis voice through the network 220, but aspects are not limited thereto, and a different number of user terminals may be configured to be in communication with the user system 230 for generating a synthesis voice through the network 220.

The user terminals 210_1, 210_2, and 210_3 may provide the target text and the style tag to the system 230 for generating a synthesis voice. The user terminals 210_1, 210_2, and 210_3 may call an API to input the style tag represented by natural language, and provide, through the called API, the style tag and the target text to the system 230 for generating a synthesis voice.

Table 1 below shows an example of inputting the target text and the style tag through the called API.

**[Table 1]**

| |
|---|
| ```
$ curl -XPOST $API_HOST/api/speak \
-H "Authorization: Bearer $API_TOKEN" \
-H "Content-Type: application/json" \
-d '{
"text": "Hello everyone, nice to meet you.",
"style_tag": "Lively with a happy heart",
"lang": "KR",
"actor_id": "5d47d74ae6c008000757252c",
"max_seconds": 30
}'
``` |

In the above example, "Hello everyone, nice to meet you" is input as the target text, and "Lively with a happy heart" is input as the style tag.

In addition, the user terminals 210_1, 210_2, and 210_3 may receive, from the system 230 for generating a synthesis voice, a synthesis voice and/or a video content generated based on the target text and the style tag.

FIG. 2 illustrates each of the user terminals 210_1, 210_2, and 210_3 and the system 230 for generating a synthesis voice as separate elements, but aspects are not limited thereto, and the system 230 for generating a synthesis voice may be configured to be included in each of the user terminals 210_1, 210_2, and 210_3.

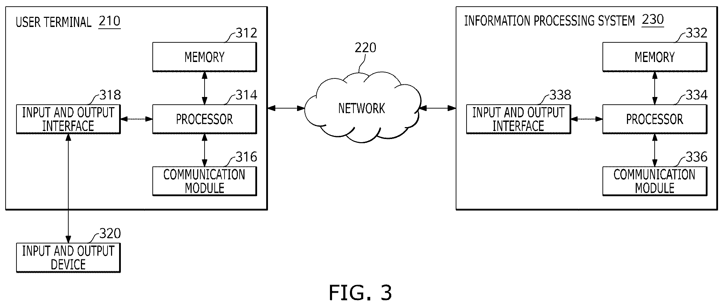

FIG. 3 is a block diagram illustrating an internal configuration of the user terminal 210 and the system 230 for generating a synthesis voice. The user terminal 210 may refer to any computing device capable of wired and/or wireless communication, and may include the mobile phone or smart phone 210_1, the tablet computer 210_2, the laptop or desktop computer 210_3 of FIG. 2, etc., for example. As illustrated, the user terminal 210 may include a memory 312, a processor 314, a communication module 316, and an input and output interface 318. Likewise, the system 230 for generating a synthesis voice may include a memory 332, a processor 334, a communication module 336, and an input and output interface 338. As illustrated in FIG. 3, the user terminal 210 and the system 230 for generating a synthesis voice may be configured to communicate information and/or data through the network 220 using the respective communication modules 316 and 336. In addition, an input and output device 320 may be configured to input information, data, etc. to the user terminal 210, or output information, data, etc. generated from the user terminal 210 through the input and output interface 318.

The memories 312 and 332 may include any non-transitory computer-readable recording medium. The memories 312 and 332 may include a permanent mass storage device such as read only memory (ROM), disk drive, solid state drive (SSD), flash memory, etc. As another example, a non-destructive mass storage device such as ROM, SSD, flash memory, disk drive, etc. may be included in the user terminal 210 or the system 230 for generating a synthesis voice as a separate permanent storage device that is separate from the memory. In addition, an operating system and at least one program code (e.g., a code for generating a synthesis voice based on style tag, a code for generating a video image, etc.) may be stored in the memories 312 and 332.

These software components may be loaded from a computer-readable recording medium separate from the memories 312 and 332. Such a separate computer-readable recording medium may include a recording medium directly connectable to the user terminal 210 and the system 230 for generating a synthesis voice, and may include a computer-readable recording medium such as a floppy drive, a disk, a tape, a DVD/CD-ROM drive, a memory card, etc., for example. In another example, the software components may be loaded into the memories 312 and 332 through the communication modules rather than the computer-readable recording medium. For example, at least one program may be loaded into the memories 312 and 332 based on a computer program (e.g. text-to-speech synthesis model program) installed by files provided through the network 220 by developers or a file distribution system that distributes application installation files.

The processors 314 and 334 may be configured to process the instructions of the computer program by performing basic arithmetic, logic, and input and output operations. The instructions may be provided to the processors 314 and 334 from the memories 312 and 332 or the communication modules 316 and 336. For example, the processors 314 and 334 may be configured to execute the received instructions according to a program code stored in a recording device such as the memories 312 and 332.

The communication modules 316 and 336 may provide a configuration or function for the user terminal 210 and the system 230 for generating a synthesis voice to communicate with each other through the network 220, and may provide a configuration or function for the user terminal 210, the system 230 for generating a synthesis voice, etc. to communicate with another user terminal or another system (e.g., a separate cloud system, etc.). For example, a request (for example, a request to generate a synthesis voice, etc.) generated by the processor 314 of the user terminal 210 according to the program code stored in the recording device such as the memory 312 etc. may be transmitted to the system 230 for generating a synthesis voice through the network 220 under the control of the communication module 316. Conversely, a control signal or instructions provided under the control of the processor 334 of the system 230 for generating a synthesis voice may be received by the user terminal 210 through the communication module 316 of the user terminal 210 via the communication module 336 and the network 220.

The input and output interface 318 may be a means for interfacing with the input and output device 320. As an example, the input device may include a device such as a keyboard, a microphone, a mouse, and a camera including an image sensor, and the output device may include a device such as a display, a speaker, a haptic feedback device, etc. As another example, the input and output interface 318 may be a means for interfacing with a device such as a touch screen, etc. that integrates a configuration or function for performing inputting and outputting. For example, when the processor 314 of the user terminal 210 processes the instructions of the computer program loaded in the memory 312, a service screen, which is configured with the information and/or data provided by the system 230 for generating a synthesis voice or other user terminals, may be displayed on the display through the input and output interface 318.

While FIG. 3 illustrates that the input and output device 320 is not included in the user terminal 210, aspects are not limited thereto, and the input and output device 320 may be configured as one device with the user terminal 210. In addition, the input and output interface 338 of the system 230 for generating a synthesis voice may be a means for interfacing with a device (not illustrated) for inputting or outputting, which may be connected to, or included in the system 230 for generating a synthesis voice. While FIG. 3 illustrates the input and output interfaces 318 and 338 as the components configured separately from the processors 314 and 334, aspects are not limited thereto, and the input and output interfaces 318 and 338 may be configured to be included in the processors 314 and 334.

The user terminal 210 and the system 230 for generating a synthesis voice may include more components than the components illustrated in FIG. 3. Meanwhile, it would be unnecessary to exactly illustrate most of the related components. The user terminal 210 may be implemented to include at least a part of the input and output device 320 described above. In addition, the user terminal 210 may further include another component such as a transceiver, a global positioning system (GPS) module, a camera, various sensors, a database, etc. For example, if the user terminal 210 is a smart phone, the user terminal 210 may include components generally included in the smart phone. For example, in an implementation, various components such as an acceleration sensor, a gyro sensor, a camera module, various physical buttons, buttons using a touch panel, input and output ports, a vibrator for vibration, etc. may be further included in the user terminal 210.

The processor 314 of the user terminal 210 may be configured to operate a synthesis voice generation application, a video generation application, etc. At this time, codes associated with the applications and/or programs may be loaded into the memory 312 of the user terminal 210. While the application and/or program is running, the processor 314 of the user terminal 210 may receive information and/or data provided from the input and output device 320 through the input and output interface 318 or receive information and/or data from the system 230 for generating a synthesis voice through the communication module 316, and process the received information and/or data and store in the memory 312. In addition, such information and/or data may be provided to the system 230 for generating a synthesis voice through the communication module 316.

While the program for the synthesis voice generation application, etc. is running, the processor 314 may receive texts, images, etc., which are inputted or selected through the input device 320 such as a touch screen, a keyboard, etc. connected to the input and output interface 318, and store the received texts, and/or images in the memory 312 or provide them to the system 230 for generating a synthesis voice through the communication module 316 and the network 220. The processor 314 may receive an input for the target text (e.g., one or more paragraphs, sentences, phrases, words, phonemes, etc.) through the input device 320.

According to another example, the processor 314 may receive, through the input device 320 and the input and output interface 318, an input to upload a document format file including the target text through the user interface. In response to this input, the processor 314 may receive a document format file corresponding to the input from the memory 312 and acquire the target text included in the file. The target text acquired as described above may be provided to the system 230 for generating a synthesis voice through the communication module 316.

Additionally, the processor 314 may receive the input for the style tag through the input device 320. The processor 314 may provide the target text and the style tag received via the communication module 316 to the system 230 for generating a synthesis voice.

The processor 314 may be configured to output the processed information and/or data through an output device such as a device capable of outputting a display (e.g., a touch screen, a display, etc.) of the user terminal 210 or a device capable of outputting an audio (e.g., a speaker). For example, the processor 314 may output, on the screen, the target text and the style tag received from at least one of the input device 320, the memory 312, or the system 230 for generating a synthesis voice. In addition, the processor 314 may output a synthesis voice through a device capable of outputting voice, such as a speaker. Additionally, the processor 314 may output a video image through a device capable of outputting a display, such as the screen of the user terminal 210, and a device capable of outputting an audio, such as a speaker.

The processor 334 of the system 230 for generating a synthesis voice may be configured to manage, process, and/or store the information and/or data received from a plurality of user terminals including the user terminal 210 and/or a plurality of external systems. The information and/or data processed by the processor 334 may be provided to the user terminal 210 through the communication module 336. The processor 334 may receive the target text and the style tag from the user terminal 210, the memory 332, and/or the external storage device, and generate a synthesis voice based on the received target text and style tag. At this time, the processor 334 may input the target text and the style tag into the text-to-speech synthesis model and acquire a synthesis voice output from the text-to-speech synthesis model.

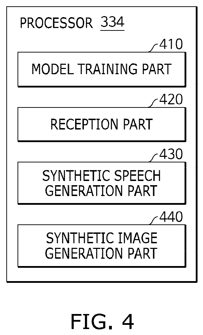

FIG. 4 is a block diagram illustrating an internal configuration of the processor 334 included in the system 230 for generating a synthesis voice. The processor 334 may include a model training module 410, a reception module 420, a synthesis voice generation module 430, and a synthesis image generation module 440.

The model training module 410 may train a text-to-speech synthesis model using a plurality of training sets. The training set may include training text, training style tags, and reference voice data. The reference voice data may be voice data used as the ground truth. In addition, the training style tag is related to the voice style inherent in the reference voice data and may be a type of target voice style. The text-to-speech synthesis model may be stored in any storage medium accessible to the model training module 410 and the synthesis voice generation module 430 through wired and/or wireless communication.

If the training style tag and the training text included in the training set are received, the text-to-speech synthesis model may generate a synthesis voice for the training text, in which the voice style feature is reflected in the synthesis voice so that the voice style features including tone, intonation, emotion, etc., inherent in the synthesis voice match the voice style features extracted from the style tag. The talking rate (e.g., frame replay rate), frequency pitch, frequency amplitude, frequency waveform, etc. of the synthesis voice may be determined based on the voice style features.

The model training module 410 may train the text-to-speech synthesis model to minimize loss between the synthesis voice output from the text-to-speech synthesis model and the reference voice data included in the training set. As training progresses, the weight of at least one node included in the text-to-speech synthesis model may be adjusted. Various loss functions may be used to calculate the loss. For example, a loss function that calculates, as a loss, the difference between the frequency waveform of the reference voice data and the frequency waveform of the synthesis voice may be used. As another example, a loss function that calculates, as a loss, the difference between the first embedding vector for the reference voice data and the second embedding vector for the synthesis voice may be used.

In addition, the model training module 410 may train a voice-to-video synthesis model using a plurality of training sets. The training set may include training synthesis voice data, training style tag, and at least one ground truth parameter. Additionally, the training set may further include video data corresponding to audio data. The ground truth parameter may be a parameter related to facial expression, and may be, for example, a parameter related to a landmark or blendshape expressed on the face. For example, if the training style tag is "happy", the ground truth parameter may be a parameter related to a happy facial expression, and if the training style tag is "sadness", the ground truth parameter may be a parameter related to a sad facial expression. The voice-to-video synthesis model may be stored in any storage medium accessible to the model training module 410 and the synthesis image generation module 440 through wired and/or wireless communication.

If the training style tag and the training synthesis voice included in the training set are received, the voice-to-video synthesis model may generate video content for the training synthesis voice, in which the voice style features may be reflected in the video content such that the facial expressions and/or gestures of the virtual character included in the video content match the voice style features extracted from the training style tag. At this time, the voice-to-video synthesis model may acquire parameters related to facial expressions from the voice style features and generate an image of a virtual character based on the acquired parameters. The model training module 410 may repeatedly train the voice-to-video synthesis model to minimize the loss between the image generated from the voice-to-video synthesis model and the ground truth image. As training progresses, the weight of at least one node included in the voice-to-video synthesis model may be adjusted.

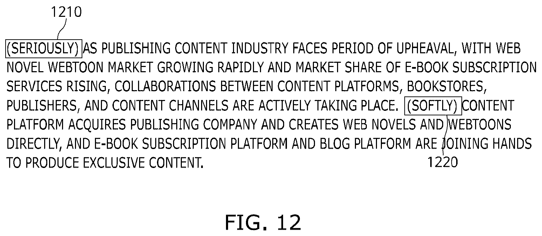

The reception module 420 may receive the target text and the style tag from the user terminal. The reception module 420 may provide the user terminal with a user interface to input a style tag. Various methods for acquiring style tags through the user interface will be described below with reference to FIGS. 12 to 16.

The synthesis voice generation module 430 may generate a synthesis voice for the target text. The synthesis voice generation module 430 may input the target text and the style tag received through the reception module 420 into the text-to-speech synthesis model to acquire a synthesis voice for the target text reflecting the features of the voice style related to the style tag. For example, the synthesis voice generation module 430 may input the target text "Here's today's weather report" and the style tag "pleasantly" into the text-to-speech synthesis model to acquire a synthesis voice of a virtual character talking "Here's today's weather report" in a pleasant voice.

The synthesis image generation module 440 may generate a synthesis image (i.e., video content) for the synthesis voice. The synthesis image may be video content in which a virtual character talks the synthesis voice while making facial expressions and/or gestures related to the style tag. The synthesis image generation module 440 may input the style tag and the synthesis voice into a voice-to-video synthesis model to acquire video content in which the virtual character talks the synthesis voice with facial expressions and/or gestures related to the style tag. For example, the synthesis image generation module 440 may input a synthesis voice recording with a fingerprint (i.e., target text) "Here's today's weather report" and the style tag "pleasantly" into the voice-to-video synthesis model to acquire video content in which the virtual character talks "Here's today's weather report" with a pleasant facial expression and/or gesture.

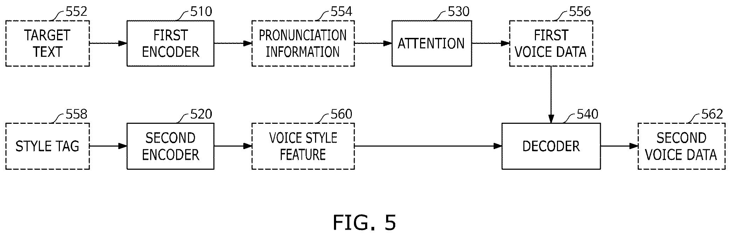

FIG. 5 is a diagram illustrating an example of outputting a synthesis voice 562 from the text-to-speech synthesis model. Referring to FIG. 5, the text-to-speech synthesis model may include a plurality of encoders 510 and 520, an attention 530, and a decoder 540. The text-to-speech synthesis model may be implemented in software and/or hardware.

The first encoder 510 may be configured to receive a target text 552 and generate pronunciation information 554 for the target text 552. The pronunciation information 554 may include phoneme information on the target text 552, vectors for each of a plurality of phonemes included in the target text, etc. For example, the target text may be divided into a plurality of phonemes by the first encoder 510, and the pronunciation information 554 including a vector for each of the divided phonemes may be generated by the first encoder 510.

The first encoder 510 may include or interoperate with a pre-net and/or a Convolution Bank Highway GRU (CBHG) module to convert the target text 552 into character embeddings, and generate the pronunciation information 554 based on the character embeddings. For example, the character embedding generated by the first encoder 510 may be passed through the pre-net including a fully-connected layer. In addition, the first encoder 510 may provide the output from the pre-net to the CBHG module to output hidden states. To this end, the CBHG module may include a 1D convolution bank, a max pooling, a highway network, and a bidirectional gated recurrent unit (GRU). The pronunciation information 554 generated by the first encoder 510 may be provided to the attention 530.

The attention 530 may concatenate or combine the pronunciation information 554 provided from the first encoder 510 and first voice data 556 corresponding to the pronunciation information 554. For example, the attention 530 may be configured to determine which portion of the target text 552 to generate speech from. The pronunciation information 554 and the first voice data 556 corresponding to the pronunciation information 554 concatenated as described above may be provided to the decoder 540. The attention 530 may determine the length of the synthesis voice based on the length of the target text and generate timing information for each of a plurality of phonemes included in the first voice data 556. For example, the timing information for each of the plurality of phonemes included in the first voice data 556 may include a duration of time for each of the plurality of phonemes, and based on this, the attention 530 may determine the duration of time for each of the plurality of phonemes.

The attention 530 may be implemented as a machine learning model based on artificial neural network. The attention 530 may include a 1D convolution (Conv1D), a normalization (Norm) layer, and a linear layer. The attention 530 may be trained to minimize the loss between the duration of time of each phoneme output from the attention 530 and the duration of time of each phoneme set as a reference. The duration of time of each phoneme set as a reference may be a kind of ground truth. For example, the duration of time of each phoneme set as a reference may be acquired from an autoregressive transformer TTS model in response to inputting a plurality of phonemes included in the first voice data into a pre-trained autoregressive transformer TTS model. As another example, the duration of time of the phoneme set as the reference may be predetermined in accordance with the phoneme type.

A second encoder 520 may receive a style tag 558 represented by natural language, extract voice style features 560 from the style tag 558, and provide the extracted voice style features 560 to the decoder 540. The style tag 558 may be written between delimiters. For example, the delimiter for the style tag 558 may be a symbol such as parentheses, a slash, a backslash, a less-than sign (<), and a greater-than sign (>). In addition, the voice style features 560 may be provided to the decoder 540 in vector form (e.g., embedding vector). The voice style feature 560 may be a text domain-based vector for the style tag 558 represented by natural language.

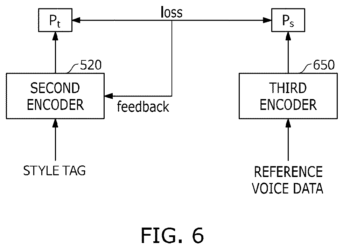

The second encoder 520 may be implemented as a machine learning model based on artificial neural network. The second encoder 520 may include Bidirectional Encoder Representations from Transformers (BERT) and adaptation layers. The second encoder 520 may be trained in advance to extract the voice style features from the style tags represented by natural language. The training of the second encoder 520 will be described in detail below with reference to FIG. 6.

The decoder 540 may generate a second voice data 562 corresponding to the target text 552 based on the first voice data 556 corresponding to the pronunciation information 554 and reflect the voice style feature 560 in the second voice data 562. The second voice data 562 may be a synthesis voice, and may reflect emotions, tone, talking rate, accent, intonation, pitch, sound volume, etc. included in the voice style features.

The decoder 540 may include a decoder RNN. The decoder RNN may include a residual GRU. The second voice data 562 output from the decoder 540 may be represented as a mel-scale spectrogram. In this case, the output of decoder 540 may be provided to a post-processing processor (not illustrated). The CBHG of the post-processing processor may be configured to convert the mel-scale spectrogram of the decoder 540 into a linear-scale spectrogram. For example, the output signal of the post-processing processor's CBHG may include a magnitude spectrogram. The phase of the output signal of the CBHG of the post-processing processor may be restored through the Griffin-Lim algorithm and subjected to the inverse short-time Fourier transform. The post-processing processor may output a voice signal in the time domain.

To build or train such a text-to-speech synthesis model, a plurality of training sets may be used. The training set may include training text, training style tags, and reference voice data. The reference voice data may be voice data used as the ground truth, and may also be used for training of the second encoder 520, as will be described below.

A training text may be input to the first encoder 510, a training style tag may be input to the second encoder 520, and synthesized voice data may be output from the decoder 540. In this case, the loss between the synthesized voice data and the reference voice data may be calculated, and the calculated loss may be fed back to at least one of the first encoder 510, the second encoder 520, the attention 530, and the decoder 540, thereby adjusting the weight of the machine learning model including at least one of the first encoder 510, the second encoder 520, the attention 530, and the decoder 540.

Various loss functions may be used for calculating the loss. For example, a loss function that calculates, as a loss, the difference between the frequency waveform of the reference voice data and the frequency waveform of the synthesized voice data may be used. As another example, a loss function that calculates, as a loss, the difference between the first embedding vector for the reference voice data and the second embedding vector for the voice data output by the decoder 540 may be used. As training is repeated using a plurality of training sets, the weight of the machine learning model including at least one of the first encoder 510, the second encoder 520, the attention 530, and the decoder 540 may converge to an optimal value.

In FIG. 5, the attention 530 and the decoder 540 are illustrated as separate components, but aspects are not limited thereto. For example, the decoder 540 may include the attention 530. In addition, in FIG. 5, the voice style feature 560 is illustrated as being input to the decoder 540, but aspects are not limited thereto. For example, the voice style feature 560 may be input to the attention 530.

FIG. 6 is a diagram illustrating the second encoder 520 being trained. At least one of the second encoder 520 or a third encoder 650 may be implemented as a machine learning model based on artificial neural network and may be trained using a plurality of training sets. As described above, the training set may include training style tags and reference voice data. In addition, reference voice data may include sounds (e.g., voice files) recorded based on the style tags. For example, if the first style tag is "in a strong tone because of anger", first reference voice data related to the first style tag may include a first sound recorded by reflecting the emotions, tone, etc. inherent in the first style tag. As another example, if the second style tag is "in a sad tone", second reference voice data corresponding to the second style tag may include a second sound recorded by reflecting the emotions, tone, etc. inherent in the second style tag. The reference voice data may be recorded by a professional voice performer (e.g., voice actor, actor).

The third encoder 650 may be configured to receive the reference voice data included in the training set and extract voice domain-based style features (Ps) from the sound included in the received reference voice data. The third encoder 650 may include a machine learning model trained to extract style features (Ps) from the voice data.

The second encoder 520 may be configured to receive a style tag included in the training set and extract a text domain-based style feature (Pt) from the style tag. The second encoder 520 may include BERT, and BERT may perform natural language learning using a dictionary, website, etc., and categorize natural languages representing similar emotions or moods into each groups. For example, "angry", "as if angry", "in a temper", "with a tantrum", "in anger", "pissed off", "fuming", etc. may be categorized into a first group. As another example, "happy", "pleased", "pleasantly", "brightly", "happily", "satisfied", etc. may be categorized into a second group. According to some examples, the second encoder 520 may extract similar style features from grouped natural languages. For example, "pleased", "pleasantly", "brightly", "happily", "satisfied" belonging to the second group may have similar style features. After grouping is completed, if a new style tag that does not belong to the group is received, the second encoder 520 may identify a group including a natural language most similar to the new style tag, and extract style features corresponding to the identified group as style features for the new style tag.

A loss may be calculated between the text domain-based style feature (Pt) output from the second encoder 520 and the voice domain-based style feature (Ps) output from the third encoder 650, and the calculated loss may be fed back to the second encoder 520. The weight of the node included in the second encoder 520 may be adjusted based on the fed back loss.

If training is repeated, the text-based style feature (Pt) output from the second encoder 520 may match or have only a slight difference from the voice domain-based style feature (Ps) output from the third encoder 650. Accordingly, even if the decoder uses the text-based style feature (Pt) provided from the second encoder 520, the decoder may substantially reflect the voice-based style feature (Ps) in the synthesis voice.

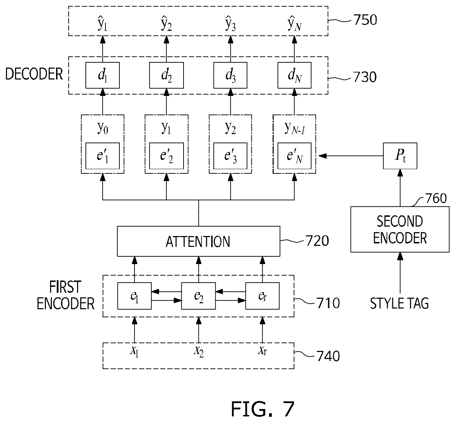

FIG. 7 is a diagram illustrating a process of generating a synthesis voice based on the style tag and the target text, in the system for generating a synthesis voice. In this example, a first encoder 710, an attention 720, a decoder 730, and a second encoder 760 may correspond to the first encoder 510, the attention 530, the decoder 540, and the second encoder 520 of FIG. 5, respectively.

FIG. 7 is illustrated based on the assumption that the length N of the speech is 4 and the length T of the text is 3, but aspects are not limited thereto, and the length N of the speech and the length T of the text may be any positive numbers different from each other.

As illustrated in FIG. 7, the second encoder 760 may be configured to receive a style tag represented by natural language and extract a voice style feature (Pt) of the text domain from the style tag. The voice style feature (Pt) extracted as described above may be provided to the decoder 730. For example, the extracted voice style features (Pt) may be provided to N decoder RNNs included in the decoder 730. The voice style feature (Pt) may be an embedding vector.

The first encoder 710 may receive a target text (x₁, x₂ , xᵣ) 740. The first encoder 710 may be configured to generate pronunciation information for the input target text 740 (e.g., phoneme information for the target text, vectors for each of a plurality of phonemes included in the target text, etc.). In addition, the first encoder 710 may be configured to output hidden states (e₁, e₂, e_{T}).

The hidden states (e₁, e₂, e_{T}) output from the first encoder 710 may be provided to the attention 720, and the attention 720 may generate conversion hidden states (e'₁, e'₂, e'₃, e'_{N}) such that the hidden states (e₁, e₂, e_{T}) correspond to the length of the spectrogram (y₀, y₁, y₂, yₙ₋₁). The generated conversion hidden states (e'₁, e'₂, e'₃, e'_{N}) may be concatenated together with the style features (Pt) and input to N decoder RNNs for processing.

The decoder 730 may be configured to reflect the style feature (Pt) and generate voice data 750 corresponding to the target text 740 based on the conversion hidden states (e'₁, e'₂, e'₃, e'_{N}) and the voice style feature (Pt). That is, the decoder 730 may output a spectrogram 750 in which the spectrogram (y₀, y₁, y₂*,* yₙ₋₁) representing a specific voice is converted by reflecting the voice style features (Pt).

Meanwhile, in some examples, a synthesis voice may be generated based on reference voice data. Specifically, if a style tag is received, the text-to-speech synthesis model may acquire reference voice data related to the received style tag and extract voice domain-based voice style features from the reference voice data. At this time, the text-to-speech synthesis model may acquire the reference voice data related to the style tag from the reference voice data included in the training set. For example, at least one processor of the system for generating a synthesis voice may identify a training style tag with the highest similarity to the style tag, acquire the reference voice data related to the identified training style tag from a plurality of training sets, and provide the acquired data to the text-to-speech synthesis model. The similarity may be determined by whether or not the string matches between the style tag and the training style tag. The text-to-speech synthesis model may extract voice style features from the acquired reference voice data and generate a synthesis voice for the target text by reflecting the extracted voice style features.

Meanwhile, a text-to-speech synthesis model may be implemented to generate a synthesis voice using sequential prosodic features.

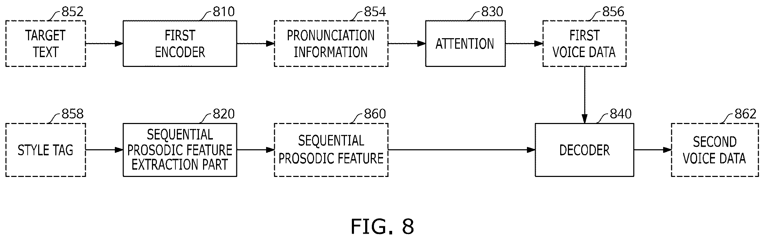

FIG. 8 is a diagram illustrating an example in which a text-to-speech synthesis model is trained. As illustrated in FIG. 8, the text-to-speech synthesis model may include a first encoder 810, a sequential prosodic feature extraction part 820, an attention 830, and a decoder 840. The first encoder 810 of FIG. 8 may correspond to the first encoder 510 of FIG. 5, and the attention 830 of FIG. 8 may correspond to the attention 530 of FIG. 5. Hereinafter, the first encoder 810 and the attention 830 corresponding to FIG. 5 will be briefly described.

The first encoder 810 may be configured to receive a target text 852 and generate pronunciation information 854 for the input target text 852.

The attention 830 may concatenate or combine the pronunciation information 854 provided from the first encoder 810 and a first voice data 856 corresponding to the pronunciation information 854.

The sequential prosodic feature extraction part 820 may receive a style tag 858 represented by natural language, generate sequential prosodic features 860 based on the style tag 858, and provide the sequential prosodic feature 860 to the decoder 840. In this example, the sequential prosodic feature 860 may include prosodic information of each time unit according to a predetermined time unit. In addition, the sequential prosodic feature 860 may be a text domain-based vector.

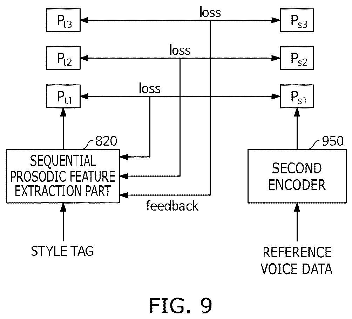

The sequential prosodic feature extraction part 820 may be implemented as a machine learning model based on artificial neural network. For example, the sequential prosodic feature extraction part 820 may include Bidirectional Encoder Representations from Transformers (BERT), adaptation layers, and a decoder. The sequential prosodic feature extraction part 820 may be trained in advance to acquire the sequential prosodic features 860 from the style tags represented by natural language. The training of the sequential prosodic feature extraction part 820 will be described in detail below with reference to FIG. 9.

The decoder 840 may be configured to generate second voice data 862 for the target text 852 based on the first voice data 856 corresponding to the pronunciation information 854 and the sequential prosodic feature 860. The second voice data 862 may be a synthesis voice and may reflect the sequential prosodic features as the voice style features. For example, the second voice data 862 may reflect emotions, tone, etc. related to the sequential prosodic features.

The decoder 840 may include an attention recurrent neural network (RNN) and a decoder RNN. The attention RNN may include a pre-net including a fully connected layer and a gated recurrent unit (GRU), and the decoder RNN may include a residual GRU. The second voice data 862 output from the decoder 840 may be represented as a mel-scale spectrogram. In this case, the output of decoder 840 may be provided to a post-processing processor (not illustrated). The CBHG of the post-processing processor may be configured to convert the mel-scale spectrogram of the decoder 840 into a linear-scale spectrogram. For example, the output signal of the post-processing processor's CBHG may include a magnitude spectrogram. The phase of the output signal of the CBHG of the post-processing processor may be restored through the Griffin-Lim algorithm and subjected to the inverse short-time Fourier transform. The post-processing processor may output a voice signal in the time domain.

To generate or train such a text-to-speech synthesis model, a plurality of training sets may be used. The training set may include training target text, training style tag, and reference voice data. The reference voice data may be voice data used as the ground truth, and may also be used for training of the sequential prosodic feature extraction part 820, as will be described below.

The training target text may be input to the first encoder 810 and the training style tag may be input to the sequential prosodic feature extraction part 820, so that synthesized voice data may be generated from the decoder 840. In this case, the loss between the synthesized voice data and the reference voice data may be calculated, and the calculated loss may be fed back to at least one of the first encoder 810, the sequential prosodic feature extraction part 820, the attention 830, or the decoder 840, thereby adjusting the weights of the machine learning model including at least one of the first encoder 810, the sequential prosodic feature extraction part 820, and the decoder 840. As training is repeated using a plurality of training sets, the weight of the machine learning model including at least one of the first encoder 810, the sequential prosodic feature extraction part 820, the attention 830, and the decoder 840 may converge to an optimal value.

In FIG. 8, the attention 830 and the decoder 840 are illustrated as separate components, but aspects are not limited thereto. For example, the decoder 840 may include the attention 830. In addition, in FIG. 8, the sequential prosodic feature 860 is illustrated as being input to the decoder 840, but aspects are not limited thereto. For example, the sequential prosodic feature 860 may be input to the attention 830.

FIG. 9 is a diagram illustrating the sequential prosodic feature extraction part 820 being trained. At least one of the sequential prosodic feature extraction part 820 or a second encoder 950 may be implemented as a machine learning model and may be trained using a plurality of training sets. As described above, the training set may include training style tags and reference voice data.

The second encoder 950 may be configured to receive the reference voice data included in the training set and extract sequential prosodic features (Ps₁, Ps₂, Ps₃) from the sounds included in the received reference voice data. The reference voice data is sequentially divided into word/phoneme units through the second encoder 950, and prosodic features (Ps₁, Ps₂, Ps₃) for each of the plurality of divided words and phonemes may be extracted. The sequential prosodic features (Ps₁, Ps₂, Ps₃) may be a phonetic domain-based embedding vector. The second encoder 950 may include a machine learning model trained to extract sequential prosodic features (Ps₁, Ps₂, Ps₃) from the voice data.

The sequential prosodic feature extraction part 820 may be configured to receive a style tag included in the training set and extract text domain-based sequential prosodic features (Pt₁, Pt₂, and Pt₃) from the style tag. The style tag may be sequentially divided into word/phoneme units through the sequential prosodic feature extraction part 820, and prosodic features (Pt₁, Pt₂, Pt₃) for each of the plurality of divided words and phonemes may be extracted. The sequential prosodic feature extraction part 820 may be implemented as a machine learning model including BERT and adaptation layers. Although FIG. 9 illustrates three sequential prosodic features, but aspects are not limited thereto.

The loss may be calculated between the text domain-based sequential prosodic features (Pt₁, Pt₂, Pt₃) output from the sequential prosodic feature extraction part 820 and the speech domain-based sequential prosodic features (Ps₁, Ps₂, Ps₃) output from the second encoder 950, and the calculated loss may be fed back to the sequential prosodic feature extraction part 820. At this time, the loss may be calculated between the speech domain-based sequential prosodic features (Ps₁, Ps₂, Ps₃) and the text domain-based sequential prosodic features (Pt₁, Pt₂, Pt₃) corresponding to the same sequence number.

If training proceeds repeatedly, the text-based sequential prosodic feature (Pt₁, Pt₂, Pt₃) output from the sequential prosodic feature extraction part 820 may match or have only a slight difference from the speech domain-based sequential prosodic feature (Pt₁, Pt₂, Pt₃) output from the second encoder 950. Accordingly, if the text domain-based sequential prosodic features are provided to the decoder, it is still possible that a synthesis voice that actually reflects the speech domain (i.e., sound)-based sequential prosodic features is generated.

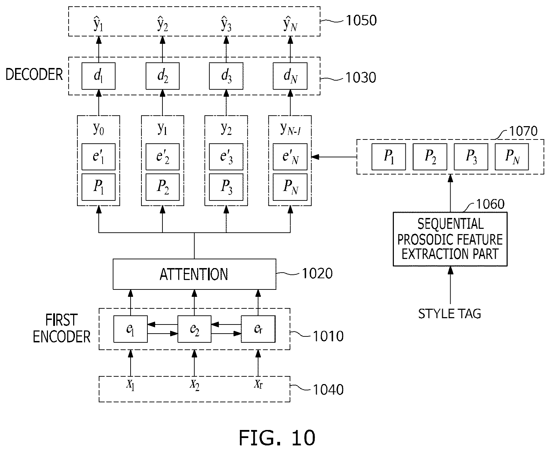

FIG. 10 is a diagram illustrating a process of generating a synthesis voice based on the style tag and the target text, in a system for generating a synthesis voice. In this example, each of a first encoder 1030, an attention 1020, a sequential prosodic feature extraction part 1060, and a decoder 1030 may correspond to the first encoder 810, the attention 830, the sequential prosodic feature extraction part 820, and the decoder 840 of FIG. 8. FIG. 10 is illustrated based on the assumption that the length N of the speech is 4 and the length T of the text is 3, but aspects are not limited thereto, and the length N of the speech and the length T of the text may be any positive numbers different from each other.

As illustrated in FIG. 10, the sequential prosodic feature extraction part 1060 may be configured to receive a style tag represented by natural language and extract sequential prosodic features (P₁, P₂, P₃, P_{N}) 1070 from the style tag. The sequential prosodic features 1070 may be a plurality of embedding vectors. The sequential prosodic features 1070 may be provided to the decoder 1030. For example, the sequential prosodic features 1070 may be provided to N decoder RNNs included in the decoder 1030.

A first encoder 1010 may receive a target text (x₁, x₂, xᵣ) 1040. The first encoder 1010 may be configured to generate pronunciation information for the input target text 1040 (e.g., phoneme information for the target text, vectors for each of a plurality of phonemes included in the target text, etc.). In addition, the first encoder 1010 may be configured to output hidden states (e₁, e₂, e_{T}).

The hidden states (e₁, e₂, e_{T}) output from the first encoder 1010 may be provided to the attention 1020, and the attention 1020 may generate conversion hidden states (e'₁, e'₂ , e'₃ , e'_{N}) such that the hidden states (e₁, e₂, e_{T}) correspond to the length of the spectrogram (y₀, y₁, y₂*,* y_{N-1})*.* The generated conversion hidden states (e'₁, e'₂ , e'₃ , e'_{N}) may be concatenated to sequential prosodic features (P₁, P₂, P₃, P_{N}) and input to each of the N decoder RNNs for processing. The decoder 1030 may be configured to reflect the voice style features and generate a synthesis voice 1050 for the target text 1040 based on the conversion hidden states (e'₁, e'₂ , e'₃, e'_{N}) and the sequential prosodic features (P₁, P₂, P₃, P_{N}) 1070. If the synthesis voice is generated by reflecting the sequential prosodic features 1070 as the voice style features, fine prosody control of the synthesis voice may be possible, and the emotions inherent in the synthesis voice may be conveyed more accurately.

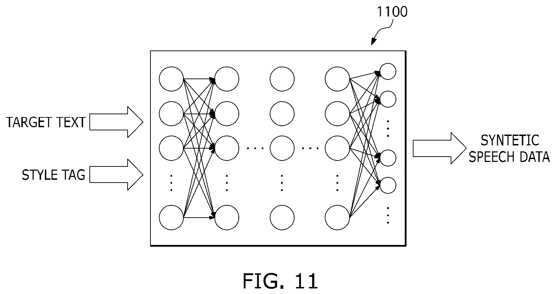

FIG. 11 is a diagram illustrating an example of a text-to-speech synthesis model 1100 configured to output a synthesis voice reflecting voice style features. In machine learning technology and cognitive science, the text-to-speech synthesis model 1100 may refer to a statistical training algorithm implemented based on the structure of a biological neural network, or to a structure for executing the algorithm. That is, the text-to-speech synthesis model 1100 represents a machine learning model that acquires a problem solving ability by repeatedly adjusting the weights of synapses by the nodes that are artificial neurons forming the network through synaptic combinations as in the biological neural networks, thus training to reduce errors between a correct output corresponding to a specific input and an inferred output.

The text-to-speech synthesis model 1100 may be implemented as a multi-layer perceptron (MLP) including multi-layer nodes and connections between them. The text-to-speech synthesis model 1100 may be implemented using one of various artificial neural network structures including the MLP. The text-to-speech synthesis model 1100 includes an input layer that receives an input signal or data from the outside, an output layer that outputs output signal or data corresponding to the input data, and n hidden layers located between the input layer and the output layer to receive a signal from the input layer, and extract and deliver features to the output layer. In this case, the output layer receives a signal from the hidden layers and outputs the received signal to the outside.

The text-to-speech synthesis model 1100 may be configured to include a first encoder, an attention, a decoder, a second encoder, and a third encoder illustrated in FIGS. 5 to 7. According to another example, the text-to-speech synthesis model 1100 may be configured to include the first encoder, the second encoder, the attention, the sequential prosodic feature extraction part, and the decoder illustrated in FIGS. 8 to 10.

At least one processor (e.g., the processor 334 of the system 230 for generating a synthesis voice) may input the target text and the style tag represented by natural language into the text-to-speech synthesis model 1100 to acquire synthesis voice data for the input target text. At this time, features related to the style tag represented by natural language may be reflected in the synthesis voice data. The features may be voice style features, and the frequency pitch, amplitude, waveform, talking rate, etc. of the synthesis voice data may be determined based on these features.

The processor may convert the target text and the style tag into embeddings (e.g., embedding vectors) through the encoding layer of the text-to-speech synthesis model 1100 to generate synthesis voice data. The target text may be represented by any embedding representing the text, such as, for example, character embedding, phoneme embedding, etc. In addition, the style tag may be any text domain-based embedding (e.g., an embedding vector) that represents voice style features or sequential prosodic features.

Hereinafter, various examples of acquiring a style tag will be described with reference to FIGS. 12 to 16.

FIG. 12 is a diagram illustrating a target text input with a style tag. As illustrated in FIG. 12, the target text may include sentences, and in this case, different style tags 1210 and 1220 may be input for each sentence. For example, the first style tag 1210 may be input at the beginning of the first sentence, and the second style tag 1220 may be input at the beginning of the second sentence. As another example, the first style tag 1210 may be input at the end or in the middle of the first sentence, and the second style tag 1220 may be input at the end or in the middle of the second sentence.

The style tags 1210 and 1220 may be located between the delimiters, and the processor may acquire the style tag input to the target text based on the delimiters. In FIG. 12, the delimiter is illustrated as parentheses.

If first synthesis voice data for the first sentence applied with the first style tag 1210 is generated, a "serious" voice style feature may be reflected in the first synthesis voice data. If second synthesis voice data for a second sentence applied with the second style tag 1220 is generated, a "soft" voice style feature may be reflected in the second synthesis voice data.

The style tags 1210 and 1220 may be input by the user. For example, user may input both the delimiters (e.g., parentheses) and the style tags represented by natural language through an input device. As another example, the target text may be imported from an existing file or website, or the user may simply input the style tags. That is, after the target text is acquired and output from the outside, the user may input the style tag into each sentence of the target text.

Meanwhile, a style tag recommendation list suitable for the target text may be output.

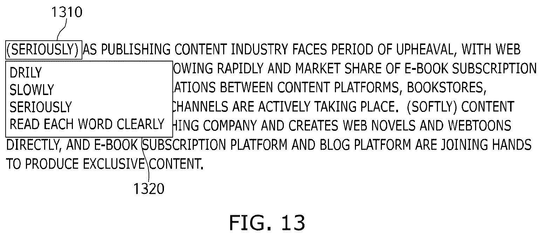

FIG. 13 is a diagram illustrating the style tag recommendation list output based on the target text. As illustrated in FIG. 13, a user interface including a style tag recommendation list 1320 for the first sentence may be provided. In FIG. 13, it is illustrated that the style tag recommendation list 1320 is output for the first sentence included in the target text.

When a selection input for one of the style tag recommendation list 1320 is received from the user, a style tag 1310 corresponding to the selection input may be acquired as a style tag of the first sentence. In FIG. 13, "seriously" 1310 is illustrated as being selected from the style tag recommendation list.

The processor may identify at least one of the emotions or moods indicated in the first sentence, determine a plurality of candidate style tags related to at least one of the identified emotions or moods, and output a style tag recommendation list including the determined plurality of candidate style tags.

A machine learning model to identify the mood of the target text may be built, and the emotion or mood of the first sentence may be identified using the machine learning model. In addition, a word-tag mapping table that stores one or more words mapped to style tags may be stored. For example, a word "market share" may be mapped to a style tag "drily", and a word "smiling face" may be mapped to a style tag "pleasantly". In this case, the processor may identify, from the word-tag mapping table, a plurality of style tags mapped to each word included in the first sentence, and generate a style tag recommendation list including the identified plurality of style tags (i.e., candidate style tags).

Meanwhile, a recommended style tag may be automatically completed and output to the user interface based on a part of the user input for the style tag.

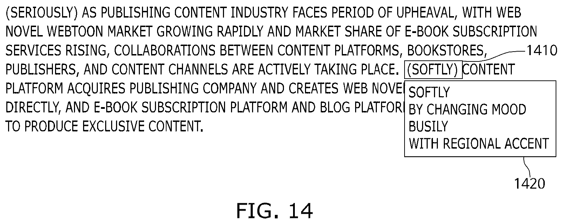

FIG. 14 is a diagram illustrating a style tag recommendation list output based on the user-input information. As illustrated in FIG. 14, in response to detecting a partial input (i.e., "soft") 1410 for the style tag of the second sentence, a processor of the system for generating a synthesis voice may automatically complete at least one candidate style tag that begins with or includes "soft", and output a style tag recommendation list 1420 including at least one automatically completed candidate style tag to the user interface. When a selection input for one of the style tag recommendation list 1420 is received from the user, a style tag corresponding to the selection input may be acquired as a style tag of the second sentence.

Meanwhile, a style tag usage pattern of the user may be stored, and based on the style tag usage pattern of this user, a style tag recommendation list may be generated and output on the user interface. To this end, the processor of the system for generating a synthesis voice may store a history of the use of style tags used by the user. In addition, the processor may determine, as candidate style tags, a plurality of style tags used within a critical rank by the user during a predetermined period of time, based on the style tag usage history. That is, the processor may determine a candidate style tag preferred by the user based on the style tag usage pattern. In addition, the processor may output a style tag recommendation list including the determined candidate style tag to the user interface.

Meanwhile, a candidate style tag may be determined based on a combination of two or more of the content of the target text, detection of partial input to the style tag, and the style tag usage pattern of the user. For example, among a plurality of candidate style tags determined based on the content of the target text, a style tag included in the style tag usage pattern of the user (i.e., a style tag that has been used by the user) may be determined as the final candidate style tag. As another example, among the candidate style tags that include the partial input of natural language related to the style tag, a style tag included in the style tag usage pattern of the user (i.e., a style tag that has been used by the user) may be determined as the final candidate style tag.

Additionally or alternatively, the style tag recommendation list may be displayed on the software keyboard.

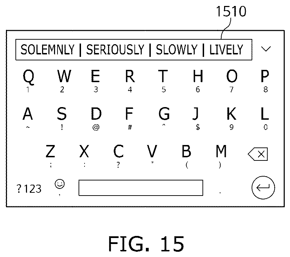

FIG. 15 is a diagram illustrating the style tag recommendation list output on the software keyboard. A style tag recommendation list 1510 generated based on the mood or emotion identified from the partial input or sentence of the style tag received from the user may be output on the software keyboard.

As illustrated in FIG. 15, the style tag recommendation list 1510 (e.g., "solemnly", "seriously", "slowly", "lively") may be displayed on the software keyboard rather than in the user interface on which the sentence is displayed.

Additionally or alternatively, style tags used for previous target text may be stored, and the stored style tags may be used for other target text.

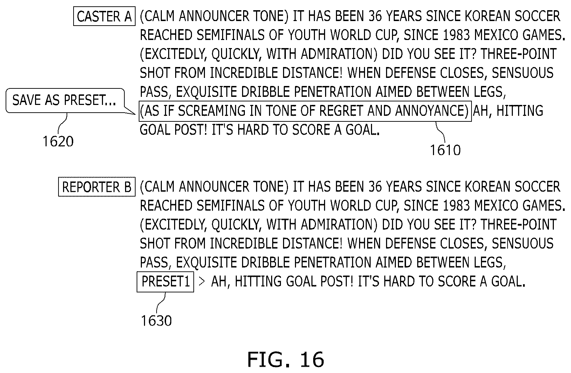

FIG. 16 is a diagram illustrating an example of reusing a style tag. The processor may provide a user interface to store the style tags as presets.

The processor may store a specific style tag as a preset according to a user input. In FIG. 16, it is illustrated that a style tag 1610 corresponding to "in a tone with regret and irritation, as if screaming" is stored as a preset1 1620. For example, a preset menu or preset shortcut key to separately store the style tag 1610 may be predefined in the user interface, and the user may separately store the style tag as a preset using the preset menu or preset shortcut key.

A plurality of different style tags may be stored as a preset list. For example, a first style tag may be stored in the preset1, a second style tag may be stored in a preset2, and a third style tag may be stored in a preset3.

The style tags stored as the presets may be reused as the style tags for the other target texts. For example, if the processor receives a selection input for a preset, the processor may acquire a style tag included in the preset as a style tag for the target text. In FIG. 16, it is illustrated that the style tag corresponding to a preset1 1630 is applied to a sentence corresponding to "Ah, hitting the goal post! It's hard to score a goal."

Meanwhile, to facilitate at least some style adjustment (or modification) in the synthesis voice generated based on the style tag, the system for generating a synthesis voice may output a user interface that visually represents the embedding vector representing the corresponding voice style features.

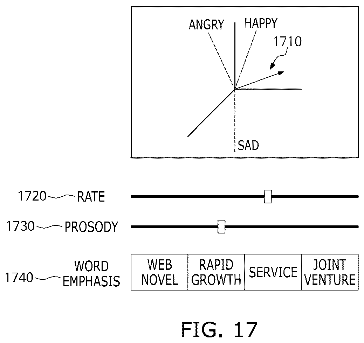

FIG. 17 is a diagram illustrating a user interface visually representing the embedding vectors. As illustrated in FIG. 17, a user interface 1700 having a visualized embedding vector 1710 representing voice style features of the synthesis voice data may be output. In FIG. 17, the embedding vector 1710 is represented as an arrow line, and the user may adjust the size and direction of the arrow line to change the embedding vector 1710. In FIG. 17, the embedding vector 1710 is illustrated as displayed in three-dimensional coordinates, and the positions of representative emotions, that is, emotions related to anger, emotions related to happiness, and emotions related to sadness, are indicated by dotted lines. Although three emotions are illustrated in FIG. 17, a larger number of representative emotions may be indicated on the user interface 1700. These representative emotions (anger, happiness, sadness, etc.) may serve as the references for changing the features of the embedding vector 1710.

If the user wants to adjust the emotion of the current synthesis voice data more closely to one of the representative emotions, the user may move the embedding vector 1710 displayed on the user interface 1700 in the direction of the desired emotion. For example, if the user wants the emotion of the synthesis voice data to reveal more happiness, the user may move the embedding vector 1710 closer to the happy position. As another example, if the user wants the emotion of the synthesis voice data to reveal more sadness, the user may move the embedding vector 1710 closer to the sad location.

Meanwhile, if the user wants to reveal more emotions included in the synthetic data, the user may change the size (i.e., length) of the embedding vector 1710 to be longer, and conversely, if the user wants to reveal less emotions included in the synthetic data, the user may change the size (i.e., length) of the embedding vector 1710 to be shorter. That is, the user may adjust the size of the embedding vector 1710 to adjust the strength and weakness of the emotion.

Meanwhile, the user interface 1700 may include a first adjustment menu 1720 to adjust the talking rate of the synthesis voice data, a second adjustment menu 1730 to adjust the prosody, and a word selection menu 1740 to further emphasize specific words. As illustrated in FIG. 17, the first adjustment menu 1720 and the second adjustment menu 1730 to adjust the prosody may include a graphic element (e.g., a bar) to select a corresponding value with.

By manipulating the control bar included in the first adjustment menu 1720, the user may adjust the talking rate of the synthesis voice data. As the control bar moves to the right, the talking rate of the synthesis voice data may increase.

In addition, by manipulating the control bar included in the second adjustment menu 1730, the user may adjust the prosody of the synthesis voice data. As the control bar moves to the right, the sound volume and/or pitch of the synthesis voice data may increase, and the sound length of the voice data may increase.

The words included in the target text may be displayed on the user interface 1700. The system for generating a synthesis voice may extract words included in the target text and display the word selection menu 1740 including the extracted words on the user interface 1700. The user may select one or more words included in the user interface 1700. The synthesis voice data may be modified so that the words selected by the user are talked with emphasis. The sound size and/or sound height of the spectrogram related to the selected word may be increased.

The system for generating a synthesis voice may modify the features of the synthesis voice data based on adjustment input information input through the user interface 1700. That is, the system for generating a synthesis voice may modify the synthesis voice data based on at least one of the adjustment input information of the embedding vector 1710, the input information for the first adjustment menu 1720, the input information for the second adjustment menu 1730, or the input information for the word emphasis menu 1740. The modified synthesis voice data may be transmitted to the user terminal.

The user may perform subtle modifications to the voice style features applied to the synthesis voice by modifying and changing the embedding vector 1710 represented with graphic elements, and thus receive a modified synthesis voice. Additionally or alternatively, the user may use the menus 1720, 1730, and 1740 included in the user interface 1700 to adjust the speech speed, prosody, emphasis on specific words, etc. of the synthesis voice data.

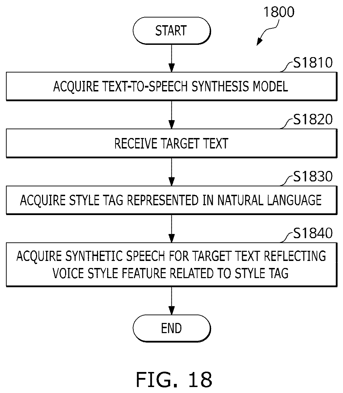

FIG. 18 is a flowchart provided to explain a method 1800 for generating a synthesis voice. The method illustrated in FIG. 18 is merely one example for achieving the object of the present disclosure, and it goes without saying that certain steps may be added or omitted as needed. In addition, the method illustrated in FIG. 18 may be performed by one or more processors included in the system for generating a synthesis voice. For convenience of description, it will be described that each step illustrated in FIG. 18 is performed by the processor included in the system for generating a synthesis voice illustrated in FIG. 1.

The processor may acquire a text-to-speech synthesis model trained to generate a synthesis voice for a training text based on the reference voice data and the training style tag represented by natural language, at S1810.

The processor may receive the target text, at S1820. In addition, the processor may acquire a style tag represented by natural language, at S1830. The processor may provide a user interface to input a style tag, and acquire a style tag represented by natural language through the user interface. For example, the processor may output a style tag recommendation list including a plurality of candidate style tags represented by natural language to the user interface, and acquire at least one candidate style tag selected from the style tag recommendation list as a style tag for the target text. At this time, the processor may identify at least one of the emotions or moods represented in the target text and determine a plurality of candidate style tags related to the at least one of the identified emotions or moods. In addition, the processor may determine a plurality of candidate style tags based on the style tag usage pattern of the user.

The processor may input the style tag and the target text into the text-to-speech synthesis model to acquire a synthesis voice for the target text reflecting the voice style features related to the style tag, at S1840. The text-to-speech synthesis model may acquire embedding features for the style tag and generate a synthesis voice for the target text reflecting the voice style features based on the acquired embedding features. In another example, the text-to-speech synthesis model may extract sequential prosodic features from the style tags and generate a synthesis voice for the target text reflecting the sequential prosodic features as the voice style features. Meanwhile, the text-to-speech synthesis model may generate a synthesis voice for the target text reflecting the voice style features based on features of reference voice data related to the style tag.

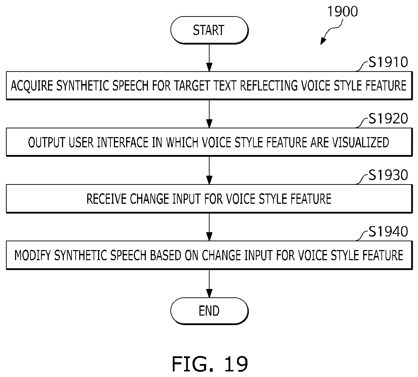

FIG. 19 is a flowchart provided to explain a method 1900 for modifying a synthesis voice based on information input through the user interface. The method illustrated in FIG. 19 is merely one example for achieving the object of the present disclosure, and it goes without saying that certain steps may be added or omitted as needed. In addition, the method illustrated in FIG. 19 may be performed by one or more processors included in the system for generating a synthesis voice. For convenience of description, it will be described that each step illustrated in FIG. 19 is performed by the processor included in the system for generating a synthesis voice illustrated in FIG. 1.

The processor may input the target text into the text-to-speech synthesis model and acquire a synthesis voice for the target text reflecting voice style features, at S1910.

The processor may output a user interface having a visualized voice style features, at S1920. For example, as illustrated in FIG. 17, the voice style features may be visualized as shapes and the user interface including a plurality of menus may be output. At this time, the processor may acquire the voice style features from the text-to-speech synthesis model and determine the position and size of the shapes based on the acquired voice style features. For example, if the shape is an arrow, the processor may determine the direction, position, and size of the arrow based on the voice style features and output the determined results on the user interface.

In addition, the processor may determine a plurality of candidate words from the target text and output, on the user interface, the determined plurality of candidate words as candidate words to be emphasized. The plurality of candidate words may be at least one of noun, adverb, verb, or adjective included in the target text.

The processor may receive, through the user interface, a change input for the visualized voice style features, at S1930. For example, the processor may receive a change input for the voice style features visualized as a shape in the user interface, which may include at least one of a change in the size of the shape, or a change in the position of the shape. In this case, the processor may identify a change value for the voice style feature based on the changed shape.

The processor may modify the synthesis voice based on the change input for the voice style features, at S1940. For example, if the processor receives a selection input for a word to be emphasized through the user interface, the processor may modify the synthesis voice such that the selected word is talked with emphasis. As another example, if a change input for the speed adjustment menu included in the user interface is received, the processor may modify the talking rate of the synthesis voice based on the change input for the speed adjustment menu. As yet another example, if a change input for the prosody adjustment menu included in the user interface is received, the processor may modify the prosody of the synthesis voice based on the change input for the prosody adjustment menu. The processor may modify the talking rate (e.g., frame playback rate), frequency pitch, frequency amplitude, frequency waveform, etc. of the synthesis voice based on the correction input.

Meanwhile, the system for generating a synthesis voice may further include a voice-to-video synthesis model to generate video content in which a character speaks with facial expressions and/or gestures that match the voice style features.

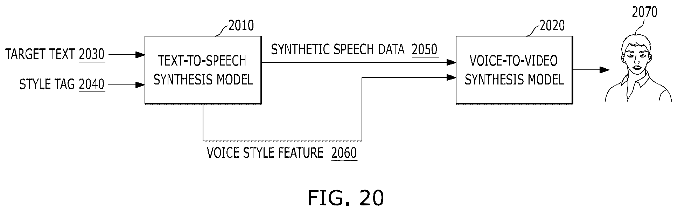

FIG. 20 is a diagram illustrating a process of generating a video content talking in a voice with a facial expression matching the voice style feature. The system for generating a synthesis voice may include a text-to-speech synthesis model 2010 and a voice-to-video synthesis model 2020. The text-to-speech synthesis model 2010 and/or the voice-to-video synthesis model 2020 may be implemented as a machine learning model including an artificial neural network.

The text-to-speech synthesis model 2010 may correspond to the text-to-speech synthesis model described above with reference to FIGS. 5 to 10. The text-to-speech synthesis model 2010 may receive a target text 2030 and a style tag 2040 and extract a voice style feature 2060 from the received style tag 2040. The voice style feature 2060 may be an embedding vector. In addition, the text-to-speech synthesis model 2010 may generate synthesis voice data 2050 by converting the target text 2030 into voice data using a virtual voice, and reflect the voice style features 2060 in the synthesis voice data 2050. In other words, the text-to-speech synthesis model 2010 may output the synthesis voice data 2050 reflecting the voice style features 2060, and the synthesis voice data 2050 may be provided to the voice-to-video synthesis model 2020. In addition, the voice style feature 2050 acquired by the text-to-speech synthesis model 2010 may be provided to the voice-to-video synthesis model 2020. Alternatively, the style tags 2040 may be input to the voice-to-video synthesis model 2020, in which case the voice-to-video synthesis model 2020 may extract the voice style features on its own from the style tag 2040 without being provided with the voice style features 2060 from the text-to-speech synthesis model 2010. In this case, the voice-to-video synthesis model 2020 may include the second encoder illustrated in FIGS. 5 to 7, and extract the voice style features from the style tag 2040 using the second encoder.

The voice-to-video synthesis model 2020 may output video content 2070 talking in the synthesis voice 2050 with facial expressions and/or gestures corresponding to the emotions inherent in the voice style feature 2060. The voice-to-video synthesis model 2020 may include a facial expression generator, and the facial expression generator may generate an image (or video) of talking in a synthesis voice 2050 while expressing facial expressions and/or gestures corresponding to the voice style feature 2060. The image or video may be a pre-stored image or video of a virtual person.

The voice-to-video synthesis model 2020 may acquire parameters associated with the facial expressions from the voice style features 2060 and determine the speaker's facial expressions and/or gestures based on the acquired parameters. The parameter may be a parameter related to the face, and may be, for example, a parameter related to a landmark or blendshape displayed on the face.

In order to accurately acquire the parameters, the voice-to-video synthesis model 2020 may perform training using a plurality of training sets. At this time, the training set may include training voice style features, training synthesis voice data, and ground truth parameters. The voice-to-video synthesis model 2020 may receive the training voice style features and the training voice data, acquire facial expression-related parameters from the training voice style features, and be trained to minimize the loss between the acquired parameters and the ground truth parameters.

In some examples, the voice-to-video synthesis model 2020 may acquire parameters related to facial expressions from the voice style features and generate an image of a virtual character based on the acquired parameters. The voice-to-video synthesis model 2020 may be trained iteratively to minimize the loss between the generated image and the ground truth image. During the training process, the weight of at least one node included in the voice-to-video synthesis model 2020 may be adjusted.

The voice-to-video synthesis model 2020 may generate a talking landmark sequence based on the parameters related to the facial expressions. For example, the facial expression generator included in the voice-to-video synthesis model 2020 may input speaker information (e.g., overall facial appearance, facial image, etc.), the speaker's voice (e.g., a mel spectrogram of the speaker's synthesis voice, the speaker's actual recorded voice, etc.), and/or the talking pose sequence at current frame into the landmark generation model to generate a talking landmark sequence.

The voice-to-video synthesis model 2020 may render the video content 2070 using the parameters associated with the facial expressions. In other words, the voice-to-video synthesis model 2020 may use the parameters associated with the facial expressions to generate a frame image that appears as if the speaker is talking in a voice with a facial expression corresponding to the emotion inherent in the voice style feature 2060. Additionally or alternatively, the speech-video synthesis model 2020 may use the parameters associated with the facial expressions to generate a frame image in which the speaker makes a gesture corresponding to the emotion inherent in the voice style feature 2060.

In addition, the voice-to-video synthesis model 2020 may generate the video content 2070 including the generated frame image and the synthesis voice data 2050. A video synthesizer included in the voice-to-video synthesis model 2020 may input the talking landmark sequences and/or the speaker information (e.g., reference images including the speaker's face, etc.) into a video content generation model, and generate a frame image in which the speaker appears as if talking in the corresponding voice.

The facial expression and/or the gesture of the virtual character may be determined based on the emotion, mood, etc. inherent in the style tag, and the video content of talking in a synthesis voice with the determined facial expression and/or gesture may be generated. In this case, the facial expressions and/or the gestures of the virtual character may be be naturally produced in accordance with the style tag, without requiring separate graphic work (i.e., manual work).

Meanwhile, the voice and style tags may be input to the voice-to-video synthesis model, and video content that talks in a voice with the facial expressions and/or gestures related to the style tag may be generated from the voice-to-video synthesis model.

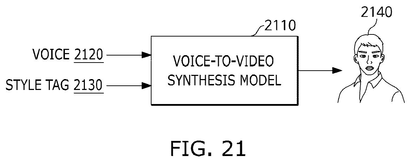

FIG. 21 is a diagram illustrating an example of generating video content 2140 talking in a voice 2120 with a facial expression and gesture related to a style tag 2130. As illustrated in FIG. 21, a voice-to-video synthesis model 2110 may receive the voice 2120 and at least one style tag 2130. The voice-to-video synthesis model 2110 may extract the style features from the style tag 2130 and generate a video content in which a virtual character talks in the voice 2120 with the facial expressions and/or gestures related to the extracted style features. The voice 2120 may be a voice recorded by the user or a speech synthesized based on the target text. In addition, the style tag 2130 may be natural language input information for determining a style of the video content.

The voice-to-video synthesis model 2110 may be implemented as a machine learning model including an artificial neural network. In addition, the voice-to-video synthesis model 2110 may include the second encoder illustrated in FIGS. 5 to 7, and extract the style features from the style tag 2130 using the second encoder. The style features may correspond to the voice style features described above. The voice-to-video synthesis model 2110 may output the video content 2140 talking in the voice 2120 with the facial expressions and/or gestures corresponding to the emotions inherent in the extracted style features.

The voice-to-video synthesis model 2110 may include a facial expression generator, and the facial expression generator may generate an image (or video) of talking in the voice 2120 while making the facial expressions and/or gestures corresponding to the style feature. The image or video may be an image or video of a pre-stored virtual character. The specific method for generating the image content using the style features and the method for training the voice-to-video synthesis model 2110 are the same as or similar to the method for generating image content using the voice-to-video synthesis model 2020 and the method for training the voice-to-video synthesis model 2020 described above with reference to FIG. 20, so detailed descriptions thereof will be omitted.

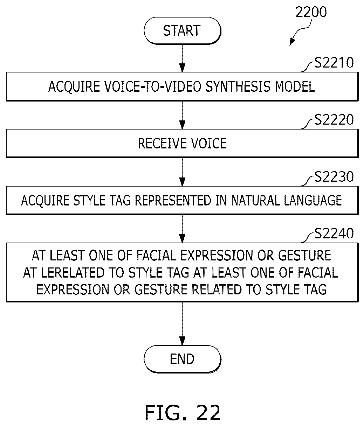

FIG. 22 is a flowchart provided to explain a method 2200 for generating a synthesis image. The method illustrated in FIG. 22 is merely one example for achieving the object of the present disclosure, and it goes without saying that certain steps may be added or omitted as needed. In addition, the method illustrated in FIG. 22 may be performed by one or more processors included in the information processing system. The information processing system may include the system for generating a synthesis voice of FIG. 2. For convenience of description, it will be described that each step illustrated in FIG. 22 is performed by the processor included in the information processing system.

The processor may acquire a voice-to-video synthesis model trained to generate image content based on the reference video data and the training style tag represented by natural language, at S2210. The voice-to-video synthesis model may be a machine learning model that extracts the style features from the training style tags represented by natural language and generates the image content (i.e., synthesis image) reflecting the style features. In addition, the loss between the image content output from the voice-to-video synthesis model and the reference video data may be calculated, and the calculated loss is fed back to the voice-to-video synthesis model, so that the weight of at least one node included in the voice-to-video synthesis model may be adjusted. If the voice-to-video synthesis model is repeatedly trained using a plurality of reference image data and the training style tag, the weight of at least one node included in the voice-to-video synthesis model may converge to an optimal value.

The processor may receive voice from the user, at S2220. The voice may be recorded by the user or another user, or may be synthesized using TTS technology. The processor may acquire a style tag represented by natural language from the user, at S2230.

The processor may input the voice and the style tag into the voice-to-video synthesis model and acquire a synthesis image talking in the voice while expressing at least one of the facial expressions or the gestures related to the style tag, at S2240. The synthesis image may be an image of a virtual character talking in the voice while making the facial expressions and/or the gestures related to the style tag.

The flowchart and description described above are merely examples, and may be implemented differently in some examples. For example, in some examples, the order of respective steps may be changed, some steps may be repeatedly performed, some steps may be omitted, or some steps may be added.

The method described above may be provided as a computer program stored in a computer-readable recording medium for execution on a computer. The medium may be a type of medium that continuously stores a program executable by a computer, or temporarily stores the program for execution or download. In addition, the medium may be a variety of recording means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, etc. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies depending on design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, etc. The instructions may be executable by one or more processors, and may cause the processor(s) to perform certain aspects of the functions described in the present disclosure.

If implemented in software, the techniques described above may be stored on a computer-readable medium as one or more instructions or codes, or may be sent via a computer-readable medium. The computer-readable media include both the computer storage media and the communication media including any medium that facilitates the transmission of a computer program from one place to another. The storage media may also be any available media that may be accessible to a computer. By way of non-limiting example, such a computer-readable medium may include RAM, ROM, EEPROM, CD-ROM or other optical disk storage, magnetic disk storage or other magnetic storage devices, or any other media that can be used to transmit or store desired program code in the form of instructions or data structures and can be accessible to a computer. In addition, any connection is properly referred to as a computer-readable medium.

For example, if the software is sent from a website, server, or other remote sources using coaxial cable, fiber optic cable, twisted pair, digital subscriber line (DSL), or wireless technologies such as infrared, wireless, and microwave, the coaxial cable, the fiber optic cable, the twisted pair, the digital subscriber line, or the wireless technologies such as infrared, wireless, and microwave are included within the definition of the medium. The disks and the discs used herein include CDs, laser disks, optical disks, digital versatile discs (DVDs), floppy disks, and Blu-ray disks, where disks usually magnetically reproduce data, while discs optically reproduce data using a laser. The combinations described above should also be included within the scope of the computer-readable media.

The software module may reside in RAM memory, flash memory, ROM memory, EPROM memory, EEPROM memory, registers, hard disk, removable disk, CD-ROM, or any other form of storage medium known. An exemplary storage medium may be connected to the processor such that the processor may read or write information from or to the storage medium. Alternatively, the storage medium may be integrated into the processor. The processor and the storage medium may exist in the ASIC. The ASIC may exist in the user terminal. Alternatively, the processor and storage medium may exist as separate components in the user terminal.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or apparatus, and storage may be similarly influenced across a plurality of apparatus. Such apparatus may include PCs, network servers, and portable apparatus.

Although the present disclosure has been described in connection with some examples herein, various modifications and changes can be made without departing from the scope of the present disclosure, which can be understood by those skilled in the art to which the present disclosure pertains. In addition, such modifications and changes should be considered within the scope of the claims appended herein.

### Exemplary embodiments:

1) A method for generating a synthesis voice for text, the method being performed by one or more processors and comprising:
   acquiring a text-to-speech synthesis model trained to generate a synthesis voice for a training text, based on reference voice data and a training style tag represented by natural language;
   receiving a target text;
   acquiring a style tag represented by natural language; and
   inputting the style tag and the target text into the text-to-speech synthesis model and acquiring a synthesis voice for the target text reflecting voice style features related to the style tag.
2) The method according to paragraph 1, wherein the acquiring the style tag includes:
   providing a user interface to input the style tag; and
   acquiring at least one style tag represented in natural language through the user interface.
3) The method according to paragraph 2, wherein the acquiring the style tag includes:
   outputting a style tag recommendation list including a plurality of candidate style tags represented by natural language to the user interface; and
   acquiring at least one candidate style tag selected from the style tag recommendation list as the style tag for the target text.
4) The method according to paragraph 3, wherein the outputting the style tag recommendation list to the user interface includes:
   identifying at least one of emotion or mood represented in the target text;
   determining the plurality of candidate style tags related to at least one of the identified emotion or mood; and
   outputting the style tag recommendation list including the determined plurality of candidate style tags to the user interface.
5) The method according to paragraph 3, wherein the outputting the style tag recommendation list to the user interface includes:
   determining the plurality of candidate style tags based on a style tag usage pattern of the user; and
   outputting the style tag recommendation list including the determined plurality of candidate style tags to the user interface.
6) The method according to paragraph 2, wherein the providing the user interface includes:
   detecting a partial input of natural language related to the style tag;
   automatically completing at least one candidate style tag including the partial input; and
   outputting the automatically completed at least one candidate style tag through the user interface.
7) The method according to paragraph 1, wherein the acquiring the style tag includes:
   receiving a selection for a preset; and
   acquiring a style tag included in the preset as the style tag for the target text.
8) The method according to paragraph 1, wherein the text-to-speech synthesis model is configured to generate the synthesis voice for the target text reflecting the voice style features, based on features of reference voice data related to the style tag.
9) The method according to paragraph 1, wherein the text-to-speech synthesis model is configured to acquire embedding features for the style tag, and generate the synthesis voice for the target text reflecting the voice style features based on the acquired embedding features.
10) The method according to paragraph 1, wherein the text-to-speech synthesis model is trained to minimize a loss between a first style feature extracted from the reference voice data and a second style feature extracted from the training style tag.
11) The method according to paragraph 1, wherein the text-to-speech synthesis model is configured to extract sequential prosodic features from the style tag and generate the synthesis voice for the target text reflecting the sequential prosodic features as the voice style features.
12) The method according to paragraph 1, further comprising inputting the acquired synthesis voice into a voice-to-video synthesis model and acquiring a video content for a virtual character talking in the synthesis voice with a facial expression related to the style tag,
   wherein the voice-to-video synthesis model is trained to determine a facial expression of the virtual character based on the style features related to the style tag.
13) The method according to paragraph 1, wherein the style tag is input through an API call.
14) A method for generating a synthesis voice for text, the method being performed by one or more processors and comprising:
   inputting a target text into a text-to-speech synthesis model and acquiring a synthesis voice for the target text reflecting voice style features;
   outputting a user interface in which the voice style features are visualized;
   receiving a change input for the visualized voice style features through a user interface; and
   modifying the synthesis voice based on the change input.
15) The method according to paragraph 14, wherein the outputting the user interface includes outputting the user interface in which the voice style features are visualized as a shape, and
   the receiving the change input includes:
   receiving the change input including at least one of a change in a size of the shape or a change in a position of the shape; and
   identifying a change value for the voice style feature based on the changed shape.
16) The method according to paragraph 14, wherein the modifying the synthesis voice includes:
   receiving, through the user interface, a selection input for a word to be emphasized; and
   modifying the synthesis voice so that the selected word is talked with emphasis.
17) The method according to paragraph 16, wherein the outputting the user interface includes:
   determining a plurality of candidate words from the target text; and
   outputting the determined plurality of candidate words to the user interface, and
   the receiving the selection input for the word to be emphasized includes receiving the selection input for at least one of the output plurality of candidate words.
18) The method according to paragraph 14, wherein the user interface includes an adjustment menu to adjust a talking rate of the synthesis voice, and
   the modifying the synthesis voice includes modifying the talking rate of the synthesis voice based on a rate change input received from the adjustment menu.
19) The method according to paragraph 14, wherein the user interface includes an adjustment menu to adjust a prosody of the synthesis voice, and
   the modifying the synthesis voice includes modifying the prosody of the synthesis voice based on a prosody change input received from the adjustment menu.
20) A method for generating a synthesis image, the method being performed by one or more processors and comprising:
   acquiring a voice-to-video synthesis model trained to generate an image content based on reference video data and a training style tag represented by natural language;
   receiving a voice;
   acquiring a style tag represented by natural language; and
   inputting the style tag and the voice into the voice-to-video synthesis model and acquiring a synthesis image talking in the voice while expressing at least one of a facial expression or a gesture related to the style tag.

## Claims

1. A method for generating a synthesis voice for text, the method being performed by one or more processors and comprising:
acquiring a text-to-speech synthesis model trained to generate a synthesis voice for a training text, based on reference voice data and a training style tag represented by natural language;
receiving a target text;
acquiring a style tag represented by natural language;
inputting the style tag and the target text into the text-to-speech synthesis model and acquiring a synthesis voice for the target text reflecting voice style features related to the style tag;
acquiring a voice-to-video synthesis model configured to generate an image content, based on reference video data and a style tag represented by natural language; and
inputting the style tag and the synthesis voice into the voice-to-video synthesis model and acquiring a synthesis image talking in the synthesis voice while expressing at least one of a facial expression or a gesture related to the style tag.
